# EUROPEAN PATENT SPECIFICATION

(11) **EP 2 215 893 B1**
(45) Date of publication and mention of the grant of the patent: **11.12.2013**
(21) Application number: 08844438.5
(22) Date of filing: 31.10.2008
(51) Int. Cl.: H05B 41/02, H05B 41/24, H05B 41/282, H05B 41/392

(54) **A LIGHTING FIXTURE SYSTEM FOR ILLUMINATION USING COLD CATHODE FLUORESCENT LAMPS**
BELEUCHTUNGSEINRICHTUNGSSYSTEM ZUR BELEUCHTUNG UNTER VERWENDUNG VON KALTKATHODEN-FLUORESZENZLAMPEN
SYSTÈME D'ÉCLAIRAGE POUR L'ÉCLAIRAGE À L'AIDE DE LAMPES FLUORESCENTES À CATHODE FROIDE

(30) Priority: 02.11.2007 US 934605
(43) Date of publication of application: 11.08.2010
(73) Proprietor: TBT Asset Management International Limited, Tortola (VG)
(72) Inventor: LAM, Victor, Hong Kong (CN); GE, Shichao, San Jose, CA 95120 (US)
(74) Representative: Kurig, Thomas
(86) International application number: PCT/US2008/082145
(87) International publication number: WO 2009/059245

(56) References cited:
- WO-A1-01/94842
- JP-A- 2005 108 776
- JP-A- 2005 347 084
- JP-A- 2006 059 590
- US-A1- 2005 275 351
- US-A1- 2006 273 731
- US-A1- 2007 041 182

## Description

### BACKGROUND OF THE INVENTION

This invention relates in general to gas discharge fluorescent devices, and in particular to a cold cathode fluorescent lamp (CCFL) system that is particularly versatile and useful for illumination applications, such as for illuminating a chamber in a building.

CCFL illumination systems are advantageous over hot cathode fluorescent lamps (HCFL) for many reasons and operate using mechanisms that are different from HCFL. The differences between CCFL systems and HCFL systems are explained in more detail in United States Patent Application Publication U.S. 2005/0275351.

As the world enters a period where energy costs will continually increase for the foreseeable future it is imperative to reduce the amount of energy that is consumed by lighting. As known to those skilled in the art, incandescent lighting is notoriously inefficient for lighting purposes. While HCFLs have been widely used to replace incandescent lamps for lighting purposes, the HCFLs are not as flexible as compared to CCFL lighting systems. For example, it may be difficult or impossible to adjust the intensity of light emitted by HCFL lighting systems for different lighting requirements, such as in a dimming operation. It is therefore desirable to provide improved lighting systems, such as ones using CCFLs, which have better characteristics and flexibility compared to prior lighting systems.

Patent Document US 2007/041182 A 1 discloses a lighting device having a serpentine shaped CCFL, a driver driving the CCFL, a connector that allows the device to connect to and receive power from conventional power sockets and a fixture that connects them into a single device.

From patent document WO 01/94842 A1 a light source for illuminating an area is known that includes a cold cathode light source, and input and an output, and a converter coupled to the light source. In WO 01/94842 A1 the converter changes the current from an input alternating current supply to a lamp alternating current supply suitable for operating the lamp, for example from utility line voltage and current and changing it to an oscillating direct current supply.

Patent document US 2006/273731 A1 discloses a high power tubular CCFL device comprising at least one CCFL. Preferably, in US 2006/273731 A1 a portion of a driver, which preferably includes at least one high voltage transformer, is employed in the fixture, wherein the fixture connects the light transmission tube, the CCFL(s) and the connector.

From patent document US 2005/275351 A1, a cold cathode gas discharge device is known that comprises an elongated fluorescent lamp that is supported along its length by means of the lamp support, such as a support pole. The support provides the device with mechanical strength, so that it does not need an outer shield for protection from external forces. A driver housing attaches together the lamp support and an electrical connector to form a rigid structure, forming a sturdy unitary.

One of the problems encountered in CCFL lighting systems is the fact that heat sensitive electronic components in the CCFL lighting system can be adversely affected by the heat generated by the CCFL lighting element itself and the lifetime of these electronic components may be reduced, thereby also reducing the useful life of the CCFL lighting system. Another problem encountered when CCFLs are used for general lighting is the need to include a converter for converting power from utility power line. This renders the CCFL device bulky and hard to use for lighting purposes, such as in lighting fixtures. It is therefore desirable to provide an improved

CCFL lighting system where the above-described disadvantages are avoided or alleviated.

Another one of the problems encountered in CCFL lighting systems pertains to replacing conventional lighting systems by CCFL - based systems, without the cost of replacing all components of the conventional lighting system.

With the different roles lighting is playing in every day life, it is desirable to be able to adjust the intensity and color temperature of lighting applications. However, as noted above, it is difficult to use lamps such as HCFLs for lighting that uses dimming or adjustment of color temperature. The lighting fixtures presently available are also not adapted for lighting operations that permit the changing of color temperature. It is thus desirable to provide a lighting fixture that enables both dimming and the adjustment of color temperature, while also achieving high energy efficiency.

### SUMMARY OF THE INVENTION

In accordance with certain embodiments, the present invention provides a method for altering a lighting system with the features of present claim 1 and an altered lighting system with the features of present claim 4. Preferred embodiments are disclosed in dependent claims.

To alleviate one or more of the problems described above, in one embodiment of the invention, the electronics supplying power to the CCFL devices may be separated into two parts that are spaced apart, so that the heat generated by the CCFL devices do not substantially adversely affect the part of the electronics that is spaced apart from the devices. In this manner, the useful life of this part of the electronics is enhanced which may enhance the useful life of the lighting system. Separating the electronics into two parts also allows the portion of CCFL device that emits light to be reduced in size, which makes the CCFL system much more versatile for different applications.

According to one embodiment of the invention, a lighting system is used for illuminating a chamber in a building where the chamber has a number of surfaces. At least one lighting fixture supports at least one CCFL and at least one transformer when the lighting fixture is mounted onto one of the surfaces of the chamber. In this manner, light emitted by the at least one CCFL illuminates the chamber. A driver is capable of converting input power from a power source to an AC power having a voltage in the range of about 5 to 400 volts and at a frequency in the range of about 1 to 100 kilohertz. The driver is separated from the at least one CCFL device so that it is substantially unaffected adversely by heat generated by the at least one CCFL device. The at least one transformer is suitable for converting the AC power to an output power suitable for operating the at least one CCFL, causing the CCFL to emit light. In one implementation, in addition to the at least one transformer, one inductor and one capacitor are also included and are supported by the at least one lighting fixture.

With the above design, it is possible to physically separate the driver or controller from the at least one CCFL device, thereby reducing the adverse effects of heat generated by the at least one CCFL device on the driver and increasing the useful life of the CCFL lighting system. Since one driver can be used to supply power to more than one CCFL device, the cost of the CCFL lighting fixture system is also reduced.

Also, since it is possible for the bulk of the electronics (such as that in the driver or controller) to also be removed from the vicinity of the at least one CCFL device, the at least one CCFL device can be made into relatively smaller form factor, which will render the at least one CCFL device much more useful and versatile. In one implementation of this embodiment, the at least one CCFL device can be very similar in size to the conventional incandescent bulbs or conventional HCFL devices, and will fit nicely into the conventional lighting fixtures designed originally for incandescent bulbs or for conventional HCFL devices. In this manner, the conventional lighting fixtures need not be replaced; only the conventional incandescent bulbs or conventional HCFL devices are replaced by CCFL devices.

In another embodiment of the invention, a lighting system comprises a plurality of fixtures and a plurality of sets of CCFL devices, each set including at least two CCFL devices. Each set of CCFL devices is supported by a corresponding one of the plurality of fixtures. Each of the CCFL devices comprises at least one CCFL and at least one transformer, and preferably one inductor and/or one capacitor. The at least one transformer in each of the CCFL devices is suitable for converting AC power having a voltage in the range of 5 to 400 volts at a frequency in the range of about 1 to 100 kilohertz to an output power suitable for operating the at least one CCFL in such CCFL device. This causes the at least one CCFL to emit light. The lighting system further comprises a plurality of drivers each supplying voltages in the range of about 5-400 volts at frequencies in the range of about 1kc-100 kc to a corresponding set of said plurality of sets of CCFL devices to cause said plurality of sets of CCFL devices to emit light. At least one of the plurality of drivers is connected by separate electrical connections to at least two CCFL devices in at least one of the plurality of sets of CCFL devices for supplying the same or different voltages to such at least two CCFL devices. The at least two CCFL devices in such one set comprises CCFLs with phosphors of different color temperatures, to provide adjustable color temperature lighting by such one set. This enables the lighting system to provide adjustable color temperature lighting.

One impediment in adopting a CCFL-based lighting system may be the need to replace existing wiring and lighting fixtures that are adapted for incandescent lamps or HCFLs. This concern can be alleviated by the following method in one embodiment by using CCFL devices having suitable connectors. This method may be applied to a lighting system designed for a configuration where one or more incandescent lamp or HCFL is supported by at least one lighting fixture mounted onto a surface of a chamber in a building where the at least one lighting fixture includes at least one conventional socket for an incandescent lamp or HCFL. The lighting system may also include electrical lines and a switch or controller controlling a voltage or current supplied to the at least one conventional socket through the electrical lines.

This method employs at least one CCFL device that may be electrically and mechanically connected to the at least one conventional socket in place of an incandescent lamp or HCFL where the at least one CCFL device comprises a connector that fits into the at least one conventional socket for electrically and mechanically connecting the at least one CCFL to the socket. The at least one CCFL device also comprises a transformer suitable for converting AC power having a voltage in the range of about 5 to 400 volts at a frequency in the range of about 1 to 100 kilohertz to an output power suitable for operating the CCFL, causing the at least one CCFL to emit light. This method comprises electrically and mechanically connecting to said at least one conventional socket the at least one CCFL device. At least one driver is installed in the lighting system where the driver is suitable for converting input power from a power source such as a utility power line to the AC power. The driver is then connected to the power source for converting input power from the power source to the AC power. In this manner, there is no need to alter the conventional lighting system, such as by replacing the electrical lines or the lighting fixture. In one implementation of this embodiment, the driver suitable for converting input power from a power source such as a utility power line to the AC power may be installed in the existing power junction box which is used to house the existing ON/OFF switch or dimmer of the existing lighting circuit with existing lighting fixtures.

Besides using the CCFL system to accommodate a conventional lighting fixture or lighting system as in the embodiments above, according to further embodiments, the CCFL system can also be used as a dedicated lighting fixture with build in CCFL devices. Where an entirely new lighting system is to be installed for example, such as in a new building, or during remodeling, there is no need to adapt the CCFL system to accommodate a conventional lighting fixture or lighting system. In such event, the lighting system includes at least one lighting fixture designed to mechanically support at least one CCFL and at least one transformer when the lighting fixture is mounted onto a surface of a chamber in a building. In this alternative embodiment, the lighting fixture is provided, and a driver is connected to a surface of the chamber and is caused to convert input power from a power source to AC power comprising a voltage in the range of about 5 to 400 volts at a frequency in the range of about 1 to 100 kilohertz. The driver is connected to the at least one transformer, which then converts the AC power to an output power suitable for operating the at least one CCFL, causing the CCFL to emit light for illuminating the chamber. In this case, it is no longer a CCFL device plugged into a conventional lighting fixture; preferably the CCFL device comes with the lighting fixture as a single unit, the CCFL device and the lighting fixture forming a unitary structure. This makes the lighting fixture systems using CCFL devices easy to install and use.

As an additional feature in the above method, the at least one lighting fixture may also be mounted onto a surface of the chamber in the building so that at least one lighting fixture mechanically supports the at least one CCFL and the at least one transformer.

In yet another alternative embodiment, where a plurality of fixtures are mounted onto a surface of a chamber in a building supporting a plurality of sets of CCFL devices, the CCFL devices may be used to emit light for lighting and illuminating the chamber. Each set of CCFL devices includes at least two CCFL devices each comprising CCFLs with phosphors of different color temperatures. Each of the sets of CCFL devices is supported by a corresponding fixture of a plurality of fixtures. Each of the CCFL devices comprises at least one CCFL and at least one transformer. In a method technique of such embodiment, input power from a power source is converted to AC power comprising one or more voltages in the range of about 5 to 400 volts at a frequency or frequencies in the range of about 1 to 100 kilohertz. The one or more voltages in the range of about 5 to 400 volts of the AC power are then supplied separately to at least two CCFL devices in one of the sets of CCFL devices, so that the same or different voltages are supplied to such CCFL devices. The at least one transformer in each of the at least two CCFL devices in such one set is suitable for converting the AC power supplied thereto to an output power suitable for operating CCFLs, causing the at least one CCFL in such CCFL device to emit light. Voltages supplied to the at least two CCFL devices in such one set are controlled separately and individually so that the same or different voltages may be applied to the at least two CCFL devices to provide adjustable color temperature lighting.

Yet another embodiment of the invention is directed to an apparatus suitable for use in altering a lighting system for illuminating a chamber in a building. The chamber has and is defined by a plurality of surfaces. The lighting system comprises at least one lighting fixture mounted onto one of the surfaces of the chamber in the building. The at least one lighting fixture includes at least one conventional socket for a conventional lamp. The lighting system further comprises electrical lines and a controller controlling a current supplied to the at least one conventional socket through said electrical lines. The apparatus comprises at least one CCFL device suitable for electrically and mechanically connecting to said at least one conventional socket, each of said at least one CCFL device comprising a CCFL lamp, a connector that fits into said at least one conventional socket for electrically and mechanically connecting said CCFL lamp to the socket, and a transformer suitable for converting an AC power having a voltage in the range of about 5-400 volts at a frequency in the range of about 1kc-100 kc to an output power suitable for operating the CCFL lamp, causing the CCFL lamp to emit light to illuminate said chamber. The apparatus further comprises an adapter unit, the adapter unit comrpising at least one driver suitable for converting input power from a power source to said AC power.

In yet another embodiment of the invention, a lighting fixture comprises at least two CCFL devices, each of the CCFL devices comprising at least one CCFL and at least one transformer. The at least one transformer in each of the CCFL devices is suitable for converting an AC power having a voltage in the range of about 5-400 volts at a frequency in the range of about 1kc-100 kc to an output power suitable for operating said at least one CCFL in such CCFL device, causing the at least one CCFL to emit light. The lighting fixture comprises at least one driver supplying voltages in the range of about 5-400 volts at frequencies in the range of about 1kc-100 kc to the at least two CCFL devices to cause said at least two CCFL devices to emit light. The at least one driver is connected by separate electrical connections to the at least two of the CCFL devices for supplying the same or different voltages to the at least two CCFL devices. The at least two CCFL devices comprises CCFLs with phosphors of different color temperatures, so that voltages applied by the at least one driver to the at least two CCFL devices will provide adjustable color temperature lighting. The lighting fixture also comprises a housing mechanically connected to and supporting the at least two CCFL devices and the at least one driver so that the at least one driver is spaced apart from the at least two CCFL devices, and so that the at least one driver is substantially unaffected adversely by heat generated by the at least two CCFL devices.

Still another embodiment of the invention is directed to a lighting system for illuminating a chamber in a building, said chamber having and defined by a plurality of surfaces, comprising the fixture of the type described in the paragraph immediately above, and a lighting controller controlling a voltage or current supplied to the at least one driver or controlling the at least one driver, or both.

One more embodiment of the invention is directed to a method for altering a lighting system for illuminating a chamber in a building, where the chamber has and is defined by a plurality of surfaces. The lighting system comprises at least one lighting fixture mounted onto one of the surfaces of the chamber in the building, electrical lines and a controller controlling a current supplied to the at least one lighting fixture through said electrical lines. The method comprises (a) replacing said at least one lighting fixture by at least one substitute lighting fixture, each of said at least one substitute lighting fixture is of the type described in the two paragraphs immediately above. The method further comprises (b) connecting the electrical lines to the at least one driver of the at least one substitute lighting fixture; and (c) replacing the controller by a substitute controller capable of sending signals to the at least one driver to control the voltages supplied to the at least two CCFL devices of the at least one substitute lighting fixture, to provide adjustable color temperature lighting.

### BRIEF DESCRIPTION OF THE DRAWINGS

FIG. IA illustrates a lighting system illuminating a chamber in a building useful for illustrating one embodiment of the invention.
FIG. IB illustrates another portion of the lighting system of FIG. IA to illustrate the embodiment of FIG. IA.
FIG. 2 illustrates a lighting system employing a conventional lighting fixture with multiple conventional lamp sockets each connected to a CCFL lamp to illustrate an alternative embodiment to the one of FIG. 1, and illustrates how a lighting system designed for use with incandescent lamps may be converted into one using CCFLs.
FIG. 3A and 3B are perspective views of CCFL lamps with drivers and conventional lamp connectors that may be used to replace incandescent lamps to illustrate the embodiment of FIGS. IA, IB and 2.
FIG. 3C is a schematic diagram of a circuit in the CCFL lamps of FIGS. 3A and 3B comprising a transformer, a capacitor and an inductor.
FIG 4 is a schematic view of a conventional lighting fixture with a conventional lamp socket and connector, and two conduits connected to the fixture to form a lighting circuit, useful for illustrating embodiments of the invention, including those of FIGS. 1-3B.
FIG. 5A is a perspective view of a portion of a lighting system where an entirely new lighting system is being installed onto a surface of a chamber in a building to illustrate another embodiment of the invention.
FIG. 5B is a schematic view of another portion of the lighting system of FIG. 5A to illustrate the embodiment of FIG. 5A.
FIG. 6 is a schematic view of a lighting system with a built-in CCFL driver or ballast comprising at least one transformer and capacitor without a lamp socket to illustrate the embodiment of FIG. 5A.
FIG. 7A is a schematic view of a lighting fixture system that may be used to replace a conventional lighting fixture, employing two CCFL devices controlled by a controller that enables adjustable color temperature or multiple color illumination to illustrate another embodiment of the invention.
FIG. 7B is a schematic view of a lighting system that may be used to replace a conventional lighting fixture, employing three CCFL devices controlled by a controller that enables adjustable color temperature or multiple color illumination to illustrate one more embodiment of the invention.
FIG. 8A is a block diagram illustrating a scheme where a lighting fixture receives power and control signals through wiring used for a conventional incandescent or HCFL lighting system to provide adjustable color temperature or multiple colors to buildings without the need to change the pre-existed lighting circuit wiring.
FIG. 8B is a schematic view of a lighting system employing a plurality of CCFL devices controlled by a common controller to illustrate another embodiment of the invention.
Identical components in this application are labeled by the same numerals.

### DETAILED DESCRIPTION OF EXEMPLARY EMBODIMENTS

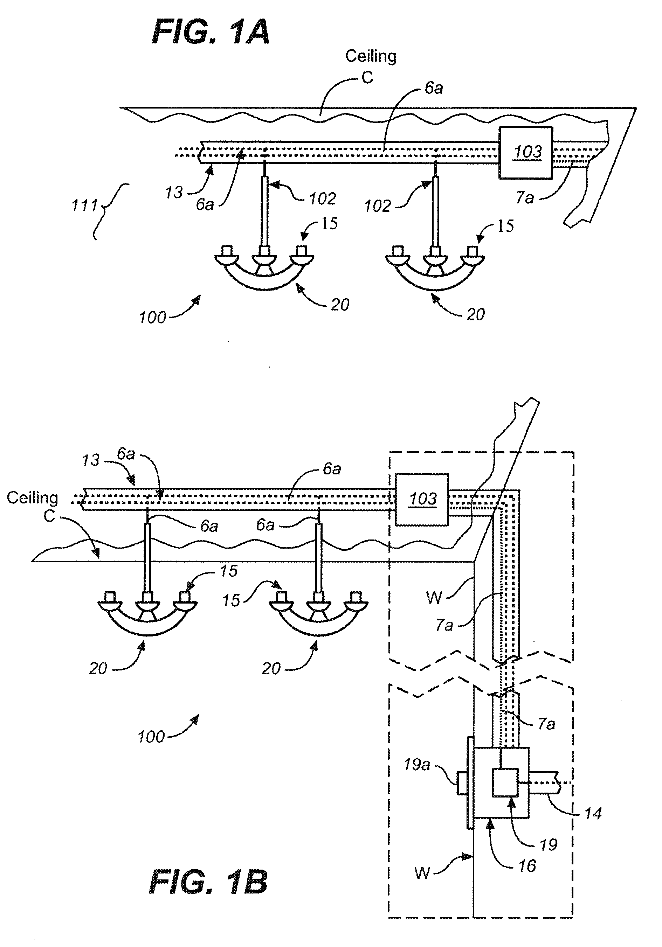

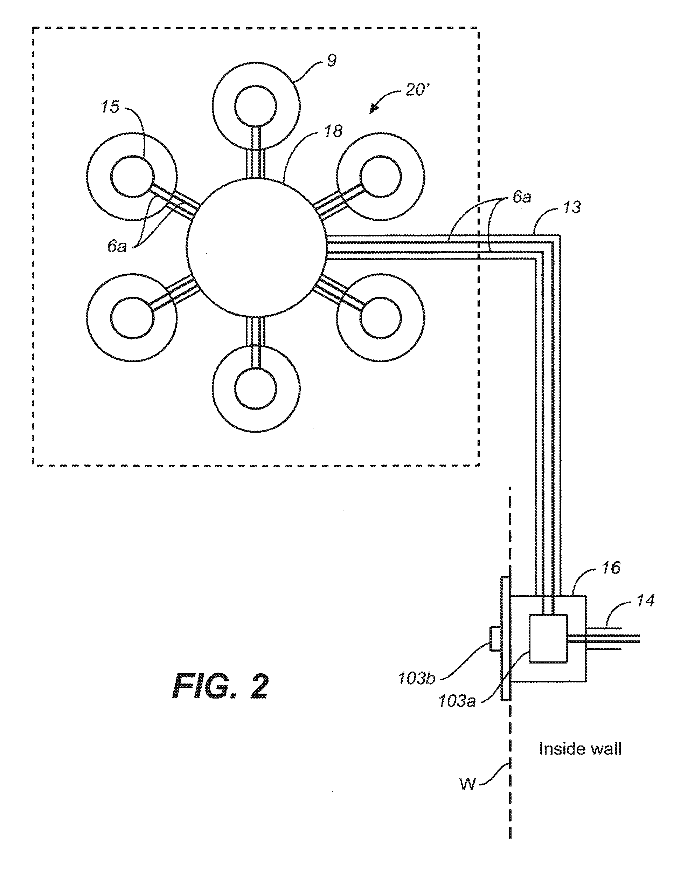

FIG. 1A illustrates a lighting system illuminating a chamber in a building useful for illustrating one embodiment of the invention. As shown in FIG. 1A, a plurality of lighting fixtures 20 are mounted and hung from the ceiling C of a chamber 100 of a building by a conventional means such as screws or rivets or eyelets 102 (not shown in detail). Most of the ceiling C (including the portions to which rivets or eyelets 102 are attached) in FIG. 1A has been cut away to expose the electrical conduits 13 above the ceiling C and the connections between the fixtures 20 and the conduit. A building is any man-made structure used or intended for supporting or sheltering any use or continuous (human) occupancy. A lighting fixture is an electrical device used to create artificial light or illumination in a building. While four fixtures are shown in FIG. 1A, it will be understood that fewer or more fixtures may be used, as illustrated in FIG. 2, which illustrates an alternative embodiment. Each fixture 20 may hold and support one or more CCFL devices 15. Power is conveyed to the CCFL devices 15 by power or electrical lines 6a in conduit 13 (e.g. one made of metal, and in some PVC or polyvinylchloride) from a controller 19. Preferably, controller 19 is placed into the conventional power junction box 16 shown in Fig. 1B behind wall W, which junction box is designed to hold and support a conventional ON/OFF lighting switch or lighting dimmer. Controller 19 has a user interface 19a such as buttons or knobs for adjusting the brightness and for turning the lighting on or off. Conduit 14 shown in Fig. 1B carries 110V/220V, 50Hz/60Hz AC power into the power junction box holding controller 19 and another conduit 13 brings wires 6a that will distribute power to the rest of the lighting circuit (e.g. CCFL devices 15) controlled by this power junction box. The junction box and its connecting conduits 13 and 14 are all hidden behind the wall W, or can be placed above the ceiling C and controlled remotely as described below. Portions of conduits 13 are hidden behind the ceiling C and wall W. The junction box is adapted to be mounted onto a chamber surface, by means such as screws. In other words, controller 19 is placed into junction box in place of or to replace a conventional ON/OFF lighting switch or lighting dimmer.

Controller 19 receives electric power, such as power at 50 or 60 Hz and 110 or 220 volts, from a power source such as utility power lines in conduit 14. Drivers 103, such as lighting ballasts, are installed in a circuit path of electrical lines 6a in conduits 13 above the ceiling C, for converting such electric power from controller 19 to an AC power (or AC signal, or AC power signal), having voltages in the range of about 5 to 400 volts at a frequency in the range of about 1 to 100 kilohertz. The load driven by the drivers 103 has a substantially constant electrical resistance, and the currents supplied by the drivers 103 also vary at frequencies in the range of about 1 to 100 kilohertz. This AC power is supplied by drivers 103 to the CCFL devices 15. Devices 15 each includes a transformer and a CCFL, where the transformer in each device 15 converts the AC power received to output power (or output signals, or output power signal) suitable for powering the CCFL, such as a voltage of 1,000 to 10,000 volts, and a voltage comprising voltage pulses at a frequency in the range of about 1 to 100 kilohertz. Drivers 103 preferably are each capable of converting power in a range of 100 Watts to 200 Watts. When controller 19 is used in commercial applications to control larger numbers of CCFL devices in each lighting circuit, it is preferably capable of converting power in a range of 100W ∼ 2000W, and controller 19 is preferably installed next to the lighting circuit behind the ceiling or wall. While multiple drivers 103 driving the CCFL devices are shown, it will be understood that a single driver 103 may suffice, depending on the power requirements of the fixtures 20, where the single or multiple drivers may be controlled by a single controller 19.

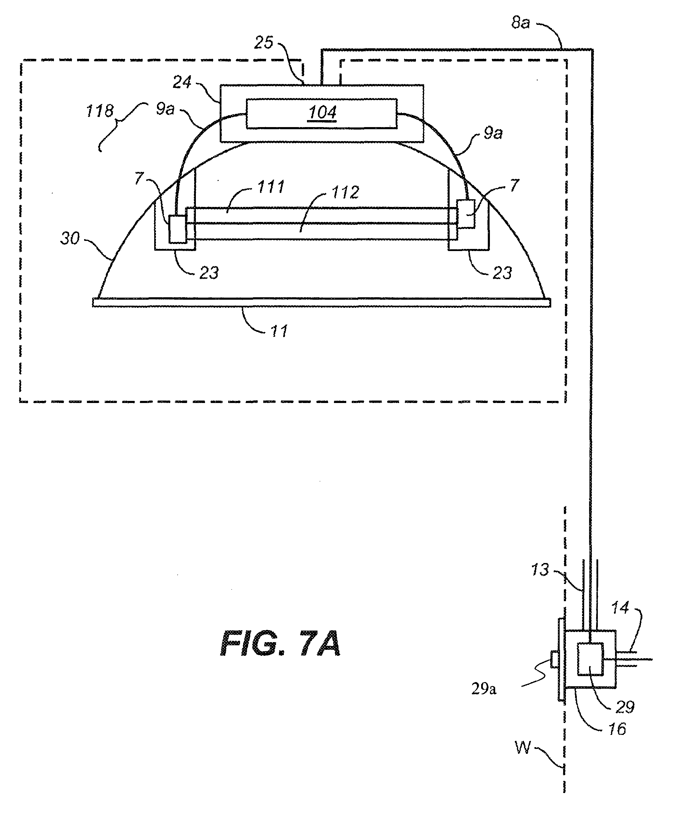

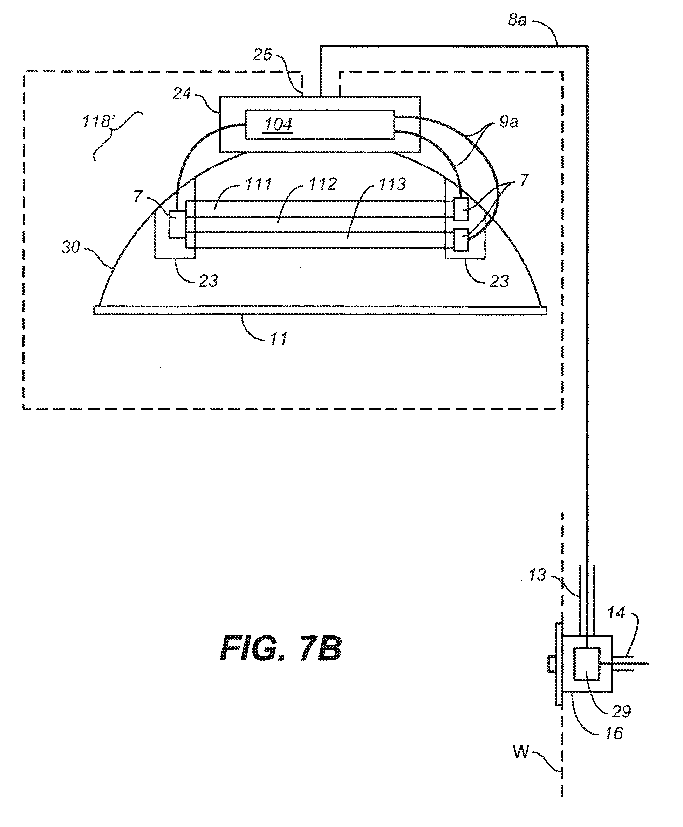

Drivers 103 are preferably connected to and supported by a surface (such as ceiling or wall) of chamber 100 so that they are physically separated and spaced apart from the CCFL devices 15 by a distance such that its operation and useful life are not affected by heat generated by the CCFL devices. In one embodiment, controller 19 is located not more than 1 foot from the CCFL devices, although a smaller distance may suffice, as in the embodiments of Figs. 7A and 7B. In this manner the drivers 103 are not or less affected by heat generated by the devices 15. This increases the life time of the drivers 103. In contrast, conventional CCFL devices include drivers or controllers for converting power from utility power lines in the vicinity of the CCFLs, so that heat generated by the CCFLs adversely affects and reduces the useful life of the drivers or controllers and hence of the CCFL devices themselves. As shown in FIG. 1A, the drivers 103 are located physically separated by at least one foot from the CCFL devices 15 supported by fixtures 20.

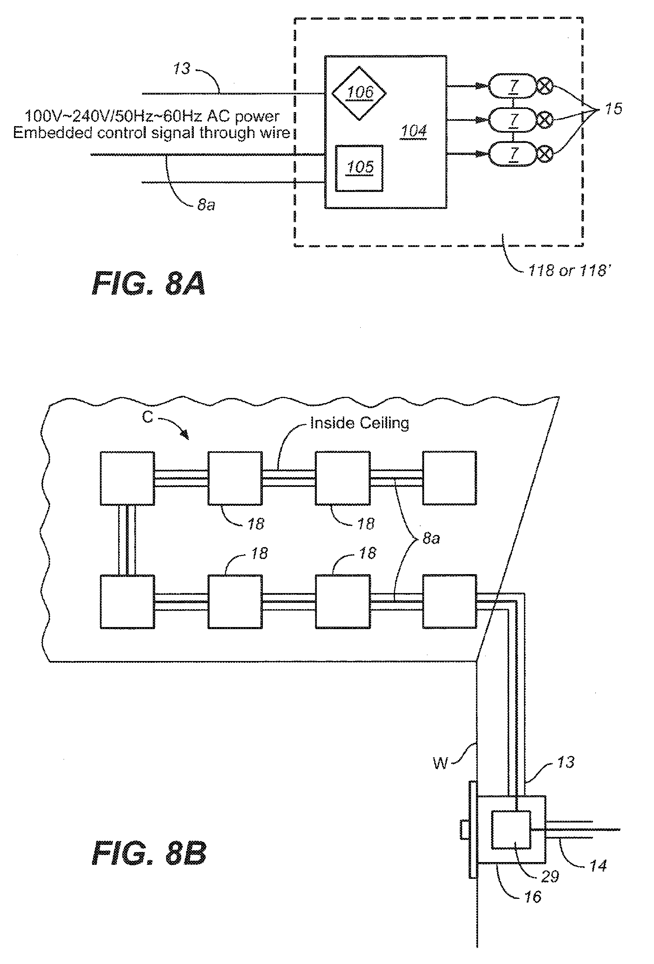

Another advantage of the lighting system 110 illustrated in FIG. 1A is that a single controller 19 may be used to control the lighting from a number of CCFL devices, thereby reducing the cost of system 110. Furthermore, by designing the CCFL system such that drivers 103 are separate from the CCFL and the transformer, when the CCFL and transformer become defective or the controller become defective, only the defective part or parts need to be replaced, again reducing the cost of maintenance of system 110 compared with conventional CCFL systems. In addition, by locating a large part of the electronics for driving the CCFL apart from the CCFL device, it is possible to reduce the overall size of the CCFL device (which includes the CCFL and transformer) to a size suitable for replacing conventional light sources such as incandescent lamps or other smaller light sources. The wall-mounted controller 19 can control multiple drivers or ballasts 103 to provide manual control of ON/OFF/dimming of the lamps in one or more lighting circuits controlled by a single ballast 103 through embedded signals transmitted through lines 6a also used to carry power for lighting purposes, in a manner described below in reference to FIG. 8A. As described below in reference to FIG. 8A, each of the drivers or ballasts 103 includes a receiver and a microprocessor for receiving and deciphering the embedded signals. The ballast 103 can also be equipped with wireless receiver to receive wireless ON/OFF/dimming control signals (e.g. infrared or radio frequency signals) through wireless means, which can be a wall mounted intelligent ON/OFF/dimming controller 19 equipped with a wireless transmitter. It can also be controlled through a portable wireless device (not shown here).

Yet another alternative to the embedded signal or wireless signal for control is to run extra wires 7a shown in Fig. 1A between controller 19 and drivers 103, to carry the control signal from controller 19 to drivers 103, for dimming operation.

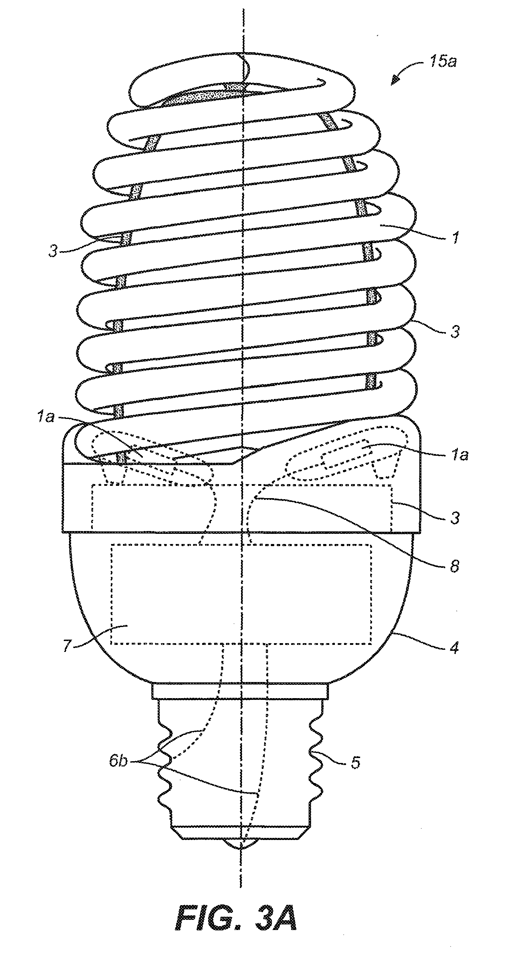

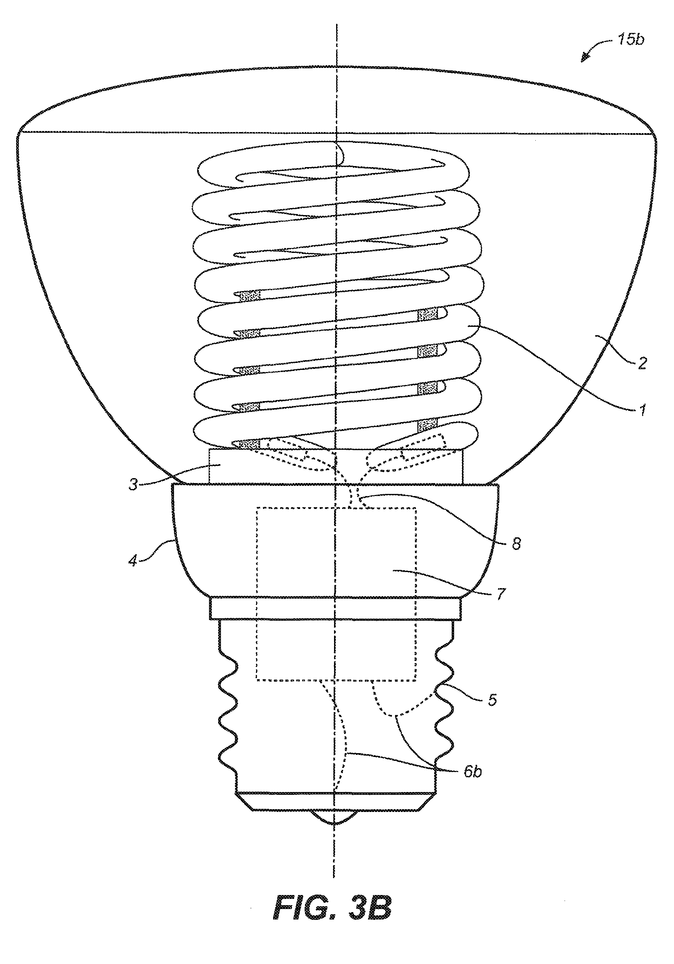

Where the lighting fixtures 20 are ones with multiple conventional lamp sockets, it is possible to retro-fit such fixtures by replacing the incandescent or HCFL lamps in these sockets with CCFL lamps with the appropriate type of connectors, such as those illustrated in Figs. 3A and 3B. Drivers 103 will need to be inserted into the circuit path of lines 6a as noted above. While it is possible to use the conventional dimming circuits designed for conventional fixtures, such as those using incandescent lamps, for controlling the dimming operation of CCFL devices, it is preferable to replace such conventional dimming circuits with other circuits instead. This is because conventional dimming circuits employ SCR type of dimming control to simply change the current passing through the incandescent lamp, which is a resistor. The CCFL device is not a resistive type of device. It is an active device with characteristics of capacitive loading. SCR type of dimmer is not a good fit for this kind of loading. Using microprocessor and digital control for CCFL dimming to control the drivers 103 specially designed to handling the capacitive loading of the CCFL device can bring out the best performances of the CCFL device to achieve smooth and linear dimming operations, similar to that achieved by changing resistance of a resistor for dimming control of incandescent lamps. Drivers or ballasts 103 and the associated circuit 7 in the CCFL described below, however, include capacitors and optional inductors. Conventional resistive dimming circuits would reduce the performance of the CCFL devices when used to operate lighting devices with significant capacitive or inductive loads. For this reason, it is preferable to replace the conventional ON/OFF switch or dimmer in box 16 with controller 19.

Controller 19 can include the conventional ON/OFF switch use to control ON/OFF power supply to driver 103 to cause it to perform ON/OFF function. However, controller 19 further includes an additional transmitter capable of sending out embedded control signals or RF signal to drivers 103. The embedded signal will be carried through by the two wires sending utility AC power to drivers 103. Control can also be wireless, where an RF signal is transmitted through RF transmitter in controller 19 wirelessly through radio frequency. It can also send a control signal through an added wire 7a directly to the driver 103. Since drivers 103 can be daisy chained together through their control port, controller 19 only needs to send such control signal through the additional wire 7a to one driver 103 to control multiple drivers 103 in the lighting system. In this manner, each of the drivers through its receiver and microprocessor can receive and decipher the information in the control signals to control the voltage applied to the individual CCFLs, so that intensity of light emitted by each individual CCFL can be controlled independently from all other CCFLs.

FIG. 2 illustrates a portion of a lighting system employing conventional lighting fixtures 20' with multiple conventional lamp sockets (not shown) for incandescent lamps each with its own lamp housing which has been adapted for use with CCFL lamps to illustrate an alternative embodiment to the one of FIG. 1A. FIG. 2 also illustrates another method as to how a lighting system designed for use with incandescent lamps may be converted into one using CCFLs. As shown in FIG. 2, electrical lines 6a in conduit 13 are connected to connectors (not shown) in a wiring compartment 18 of the conventional lighting fixture 20'. These connectors enable the AC power on lines 6a in conduit 13 to be connected to the six CCFL devices 15 supported by fixture 20' when the fixture is mounted to the ceiling (not shown) in the same manner as fixtures 20 are mounted to ceiling C as illustrated in FIG. 1A. The CCFL devices 15 are housed within portions 9 of the conventional lighting fixture 20'. Instead of a set of separate drivers 103 and controller 19 as in FIG. 1A, the functions of all such components may be combined in controller 103a, which performs the functions of drivers 103 as well as those of controller 19 of FIG. 1A. Controller 103a may be housed in a controller housing 16. As noted above, housing 16 located behind wall W can be the conventional power junction box used to house the conventional ON/OFF switch or dimmer for the conventional lighting fixture with multiple lamp sockets. Controller 103a has a user interface 103b such as buttons or knobs for adjusting the brightness and for turning the lighting on or off. The embodiment of Fig. 2 may be suitable for home applications where the lighting application does not require more than 100W of power. In such event, a combined controller 103a will fit within a conventional junction box. This embodiment has the advantage that no driver needs to be inserted in the circuit path of wires 6a. All one has to do is to replace the incandescent lamps with CCFL lamps, and to replace the conventional ON/OFF switch or dimmer for the conventional lighting fixture with controller 103a with user interface 103b in the junction box 16.

Multiple fixtures similar to lighting fixtures 20' of FIG. 2 can be controlled by a single ballast 103 as shown in Fig. 1A. When the lighting system only consists of one lighting fixture with multiple lighting devices, a lighting arrangement such as 20' illustrated in Fig. 2 may be used. This can be a chandelier with six 40W candle shaped incandescent bulbs, which can be replaced by six 9W CCFL device 15. Each of the CCFL devices 15 consumes less than 15W and the total energy consumption of this lighting fixture is less than 100W.

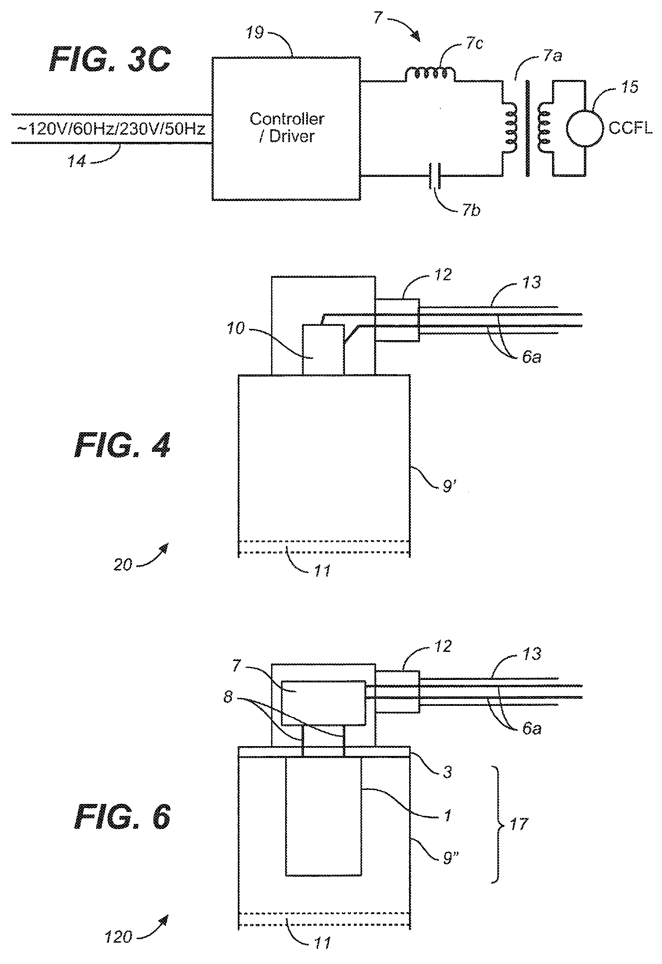

FIG. 3A and 3B are perspective views of two different CCFL lamps with drivers and conventional lamp connectors that may be used to replace incandescent lamps to illustrate the embodiment of FIGS. 1A, 1B and 2. As shown in FIG. 3A, CCFL device 15a comprises CCFL 1 with electrodes 1a, lamp support 3, a connector 5 that fits into a conventional socket (not shown) for incandescent lamps to electrically and mechanically connect the CCFL device to the socket, a circuit 7 comprising a capacitor and a transformer (and optionally an inductor) capable for converting AC power having a voltage in the range of about 5 to 400 volts at a frequency in the range of about 1 to 100 kilohertz to an output power suitable for powering a CCFL. CCFL device 15a also includes wires 8 connecting the electrodes 1a at the two ends of the CCFL 1 to the circuit 7. Wires 6b connect the circuit 7 to connector 5 which may be electrically connected to wires 6a of FIG. 2 through the conventional socket. In this manner, the AC power from controller 19 is conveyed to the circuit 7. The transformer in circuit 7 converts this AC power to an output power suitable for powering a CCFL and supplies this output power to electrodes 1a, causing CCFL 1 to emit light. FIG. 3C is a schematic diagram of electronic circuits including driver 19 and circuit 7 in the CCFL lamps of FIGS. 3A and 3B comprising a transformer 7a, a capacitor 7b and an inductor 7c.

FIG. 3B illustrates another design 15b for CCFL device 15, where the device includes a lamp housing 2 not present in CCFL device 15a. With this exception CCFL device 15b is constructed and operates in a manner similar to device 15a. Housing 2 preferably comprises a metallic, plastic, ceramic or glass material that transmits light.

FIG 4 is a schematic view of a conventional lighting fixture with a conventional lamp socket and connector, and two conduits which is used to connect the fixture to form a lighting circuit, useful for illustrating embodiments of the invention, including those of FIGS. 1-3B.

The above described schemes for using CCFLs to replace incandescent lamps for use in conventional lighting fixtures work also for replacing HCFLs in conventional lighting fixtures. Thus, illustrated in FIG. 4 is a generalized scheme that can be used for replacing either incandescent lamps or HCFLs in conventional lighting fixtures. As shown in FIG. 4, fixture 20 includes a housing or housing portion 9', a socket 10 designed for mechanical and electrical connection to an incandescent lamp or a HCFL, a connector 12 for housing connection wires 6a in conduit 13 that convey AC power to the socket 10 from controller 19. An optional face plate 11 may also be included.

The systems illustrated by FIGS. 1-4 above may be arrived at by converting a conventional lighting system designed for use with incandescent lamps or HCFLs. Thus, the fixtures 20 and 20' may simply be ones originally designed for incandescent lamps or HCFLs. The sockets in these figures, such as socket 10 in FIG. 4, are originally designed for incandescent lamps or HCFLs. Instead of installing incandescent lamps or HCFLs in these sockets, CCFL devices such as those of FIGS. 3A and 3B (or CCFL devices with the form factors of HCFLs) may be installed instead. In addition, the switches for controlling the conventional lighting system using incandescent lamps or a HCFLs may be replaced by controller 103a (e.g. Fig. 2) that is capable of converting power from a power source, such as a utility power line, to an AC power having a voltage in the range of about 5-400 volts varying at a frequency in the range of about 1kc-100 kc. Alternatively, one or more drivers or ballasts 103 and a controller 19 may be installed between the utility power source and conduit 13 connected to the CCFL devices as in Figs. 1A and 1B.

Thus, the method for altering a conventional lighting system with a fixture mounted onto a surface of a chamber is very simple. It includes electrically and mechanically connecting a CCFL device to at least one conventional socket supported by the fixture, where the CCFL device comprises a CCFL, a connector that fits into said at least one conventional socket for electrically and mechanically connecting said CCFL to the socket, and a transformer suitable for converting an AC power having a voltage in the range of about 5-400 volts varying at a frequency in the range of about 1kc-100 kc to an output power suitable for operating the CCFL lamp, causing the CCFL lamp to emit light. It includes installing or connecting a driver and a controller (or a combined driver/controller unit) between the CCFL lamp and a power source (e.g. utility power source), the driver being suitable for converting input power from the power source to said AC power. If a conventional switch is used to control the conventional lighting system, it will need to be either replaced by the driver and a controller, or a combined driver/controller unit.

### NEW LIGHTING SYSTEM

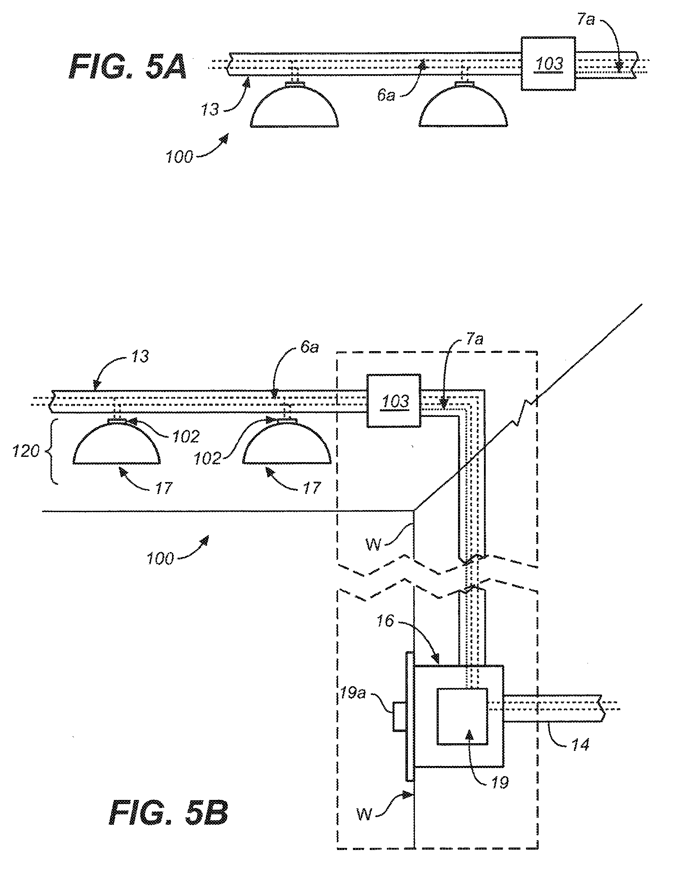

Where a lighting system is to be installed in a new building or in a remodeling process, or in a simple replacement of an old lighting system, the above designs and process may be further simplified. This is illustrated in FIGS. 5-6.

FIG. 5A is a perspective view of a portion of a lighting system comprising four fixtures 120 each containing a CCFL device 17 where an entirely new lighting system is being installed onto a surface of a chamber in a building to illustrate another embodiment of the invention. FIG. 5B is a schematic view of another portion of the lighting system of FIG. 5A to illustrate the embodiment of FIG. 5A. FIG. 6 is a schematic view of a lighting system with a built-in CCFL driver or controller comprising at least one transformer, and preferably an inductor and capacitor, but without a conventional lamp socket for housing an incandescent lamp or HCFL, to illustrate the embodiment of FIG. 5A. The CCFL 1, circuit 7, housing for circuit 7, support 3 and housing 9" are connected (preferably attached together) to form a single unit or unitary structure that can be easily installed, handled and replaced if necessary.

The major difference between fixture 120 (holding CCFL device 17) of FIGS. 5A and 6 on one hand and fixture 20 or 20' in FIGS. 1, 2 and 4 on the other is that, unlike fixtures 20 and 20', fixture 120 does not include conventional sockets for the installation of incandescent lamps or HCFLs. Instead, in CCFL device 17, a CCFL 1 may be connected directly to wires 8 which connect the CCFL 1 to circuit 7. CCFL device 17 thus includes CCFL 1, wires 8 and circuit 7. In addition to a transformer, circuit 7 preferably includes an inductor and a capacitor suitable for converting the AC power from controller 19 into power suitable for operating CCFL 1, where the AC power comprises a voltage in the range of about 5-400 volts varying at a frequency in the range of about 1kc-100 kc. Ceiling C has been omitted in Fig. 5A to simplify the figure and to expose the electrical conduits 13 above the ceiling C and the connections between the fixtures 120 and the conduit. Fixtures 120 are mounted and hung from the ceiling. While controller 19 is shown as installed behind wall W in FIGS. 1-6, again preferably in a junction box, it will be understood that it may be installed on the same surface of chamber 100 as fixtures 20 and 120, such as the ceiling (or wall W), if desired.

The drivers 103 in Fig. 5A can be controlled by control signals from controller 19 in the same manner as those described above in reference to Figs. 1A, 1B, namely, through embedded signals on the AC power lines 6a, through control singals on extra wires 7a, or through wireless means. In this manner all of the CCFL devices 17 can be controlled in turning ON/OFF or dimming operations.

### LIGHTING SYSTEMS WITH ADJUSTABLE COLOR AND MULTIPLE COLORS

Fig. 7A illustrates a lighting fixture 118 with build in CCFL devices that can offer adjustable color temperature. Lighting fixture 118 is a fixture with two CCFL devices 111 and 112 incorporated into fixture body 30 through mechanical means 23, such as two brackets. CCFL devices 111 and 112 employ phosphor with different color temperature, such as 2700K and 8000K. By controlling their brightness independently, they can produce variable color temperature between 2700K and 7000K. Housing 24 for ballast 104 is attached to the fixture 118 and provides the mechanical connection of the lighting fixture to the ceiling through screws or rivets or eyelets 25 (not shown in detail). The ballast 104 is capable of converting power from a power source, such as a utility power line, to at least two independent AC power with voltages in the range of about 5-400 volts and varying at a frequency in the range of about 1kc-100 kc. Ballast 104 is connected to two CCFLs 111 and 112 through separate wires in cable 9a and circuitry 7 as described in Fig. 3C, so that different (or the same) voltages may be applied to CCFLs 111 and 112 by ballast 104. Circuit 7 comprises a capacitor and a transformer (and optionally an inductor) capable of converting AC power having a voltage in the range of about 5 to 400 volts at a frequency in the range of about 1 to 100 kilohertz to an output power suitable for powering a CCFL. Junction box 16 houses the ON/OFF switch that controls power to lighting fixture 118. A controller 29 replaces the conventional ON/OFF switch in junction box 16 to send regular AC power from utility to lighting fixture 118 and is capable of sending also an embedded control signal through the same utility wires 8a to ballast 104 causing it to perform ON, OFF, or independent dimming of the two CCFL devices. Controller 29 can provide regular AC power from utility, as well as embedded control signal to multiple lighting fixtures 118 through the conventional wiring system designed for use with incandescent or HCFL. Controller 29 has an interface 29a which may be a control knob to perform ON/OFF/dimming manually through controller 29. Controller 29 can also be equipped with wireless means to provide ON/OFF/dimming operation (e.g. via IR or RF signals) to ballast 104 wirelessly (not shown in detail). Yet another alternative is to use extra wires (not shown), similar to wires 7a of Fig. 1A, to carry control signals. By replacing a conventional lighting fixture with lighting fixture 118 with CCFL devices 111 and 112, and replacing the conventional ON/OFF switch or controller by controller 29, the conventional lighting circuit is thus changed into one that can perform adjustable color temperature.

Fig. 7B illustrates a lighting fixture 118' similar to lighting fixture 118 of Fig. 7A. Lighting fixture 118' uses three CCFLs 111, 112 and 113 instead of two CCFLs 111 and 112 as described in Fig. 7A. CCFL 111, 112 and 113 employ red, green and blue phosphors respectively. The ballast 104 can deliver three independently controlled AC powers having a voltage in the range of about 5-400 volts varying at a frequency in the range of about 1kc-100 kc through separate wires to the three CCFLs 111, 112 and 113 through circuitry 7 as described in Fig. 3C. The ballast 104 can control the CCFL 111, 112 and 113 to operate in various brightness levels and together they will be able to provide multiple colors within lighting fixture118. Again, controller 29 can also be equipped with wireless means in a manner similar to those described above to provide ON/OFF/various color function to ballast 104 wirelessly (not shown in detail). Thus by replacing a conventional lighting fixture with lighting fixture118 with CCFL device 111, 112 and 113, and replacing the conventional ON/OFF switch or controller by controller 29, the conventional lighting circuit is changed into one that can perform multiple colors.

Fig. 8A is a block diagram that illustrates how lighting fixture 118 or 118' receives both its power and embedded control signals from the regular wiring 8a inside conduit 13 used for conventional incandescent and HCFL lighting system to provide adjustable color temperature or multiple colors to buildings without the need to change the pre-existed lighting circuit wiring. Ballast 104 has control signal receiver 106 which can receive embedded control signals from wires 8a or control signal from wireless transmitter. The embedded control signal or wireless control signal processed by microprocessor 105 to decipher the control information therein to perform a wide variety of functions. These functions include turning lighting ON, OFF, dimming, or changing the relative intensities of light emitted by the two or three CCFL devices 15 to provide adjustable color temperature or multiple colors for lighting fixture 118 or 118'. The microprocessor 105 controls the voltages applied to the CCFL devices 15 through circuitry 7. By simply replacing the conventional lighting fixtures for incandescent or HCFL, with lighting fixture 118 or 118' with built in CCFL devices and ballast 104, it can change the conventional lighting system into one that can provide either adjustable color temperature, or multiple colors for the chamber in a building. The microprocessor 105 and signal receiver 106 may be constructed and operated according to the specifications of the X-10 Communications Protocol and Power Line Interface PSC04 & PSC05 or other industry standard protocols for transmitting embedded control signal through regular utility AC wires. Other standards may also be used. Controllers 19, 103a and 29 may include transmitters that transmit signals using this or other standards.

Fig. 8B illustrates how to convert a conventional lighting circuit with 8 incandescent, or HCFL lighting fixture into a new lighting circuit with 8 lighting fixtures 118. Simply replace the conventional lighting fixture with lighting fixture 118 and replace the conventional ON/OFF switch from junction box 16 by controller 29 will result in a new lighting system that can perform either adjustable color temperature, or multiple colors in any chamber in a building. There is no need to alter any pre-existed wiring in the building. Controller 29 may send embedded control signals through the power lines 8a or wireless signals to the drivers or ballasts 104 in fixtures 118 or 118' for driving the CCFL devices 118 or 118'.

## Claims

1. A method for altering a conventional lighting system for illuminating a chamber (100) in a building, said chamber having and being defined by a plurality of surfaces (W, C), said conventional lighting system comprising at least one lighting fixture (20, 118) mounted onto one (C) of the surfaces of the chamber (100) in the building, said at least one lighting fixture (20, 118) including at least one conventional socket for a conventional lamp, said conventional lighting system further comprising electrical lines (6a, 7a) and a conventional on/off lighting switch or lighting dimmer adapted to control a current supplied to the at least one conventional socket through said electrical lines (6a, 7a); said method comprising:
removing said conventional on/off lighting switch or lighting dimmer,
**characterized by**
replacing said conventional on/off lighting switch or lighting dimmer by a substitute controller (19) that includes at least one driver (103, 104), wherein said substitute controller (19) is located in a junction box (16) behind a wall (W) of the chamber (100), said substitute controller (19) having dimensions that fit within said junction box (16),
electrically and mechanically connecting to said at least one conventional socket a CCFL device (15), said CCFL device (15) comprising a CCFL (1), a connector (5) that fits into said at least one conventional socket for electrically and mechanically connecting said CCFL (1) to the socket, and a transformer (7) suitable for converting an AC power having a voltage in the range of about 5-400 volts and a current at a frequency in the range of about 1 kc-100 kc to an output power suitable for operating the CCFL (1), causing the CCFL (1) to emit light;
wherein said at least one driver (103, 104) is installed in said conventional lighting system spaced apart from said CCFL device (15), said at least one driver (103, 104) being suitable for converting input power from a power source to said AC power; and
said at least one driver (103, 104) being connected to the power source for converting input power from the power source to said AC power.

2. The method of claim 1, wherein said substitute controller (19) modulates electrical power in the electrical lines (6a, 7a) to transmit embedded signals to said at least one driver (103, 104) to control an output of said at least one driver (103, 104) and a corresponding intensity of light emitted by said at least one CCFL device (15).

3. The method of claim 1, wherein said lighting system comprises a plurality of said lighting fixtures mounted onto the surfaces of the chamber, said method further comprising:
electrically and mechanically connecting to said at least one conventional socket of each of said plurality of lighting fixtures a CCFL device, said CCFL device comprising a CCFL, a connector that fits into said at least one conventional socket for electrically and mechanically connecting said CCFL to said socket, and said transformer.

4. An apparatus adapted to alter a conventional lighting system for illuminating a chamber (100) in a building, said chamber having and being defined by a plurality of surfaces (W, C), comprising:
at least one CCFL device (15) comprising at least one CCFL (1), a connector (5) that fits into at least one conventional socket, and at least one transformer (7) suitable for converting an AC power having a voltage in the range of about 5-400 volts at a frequency in the range of about 1 kc-100 kc to an output power suitable for operating the at least one CCFL (1), causing the at least one CCFL (1) to emit light;
at least one lighting fixture (20, 118), wherein said at least one lighting fixture (20, 118) is adapted to mechanically support said at least one CCFL device (15), when said lighting fixture (20, 118) is mounted onto one (C) of the surfaces of the chamber (100), so that light emitted by said at least one CCFL (1) illuminates said chamber (100);
a driver (103, 104) spaced apart from said at least one CCFL device (15) so that it is substantially unaffected adversely by heat generated by the at least one CCFL device (15), said driver (103, 104) being adapted to convert input power from a power source to said AC power, and
**characterized by**
a substitute controller (19) adapted to control a voltage or current supplied to the driver (103, 104) or to control the driver (103, 104), or both,
wherein said substitute controller (19) comprises said driver (103, 104) wherein said substitute controller (19) is installed in an existing power junction box (16) behind a wall (W) of the chamber (100), replacing a conventional ON/OFF lighting switch or lighting dimmer, and wherein said substitute controller has dimensions that fit within said junction box (16), and wherein said at least one lighting fixture (20, 118) comprises said at least one conventional socket, wherein said connector (5) is adapted to electrically and mechanically connect said CCFL (1) to the at least one conventional socket.

5. The system of claim 4, further comprising a metal conduit (13) with at least one connector adapted to connect said driver (103, 104) and said at least one transformer (7), to convey said AC power from said driver (103, 104) to said at least one transformer (7), said conduit (13) located at least partially outside said chamber (100) and behind said surfaces (W, C) of the chamber (100).

6. The system of claim 4, wherein said conventional socket is adapted for use with a conventional or a hot cathode fluorescent lamp and said connector (5) of said CCFL device (15) being shaped to be electrically and mechanically connected to said conventional socket of said at least one lighting fixture (20, 118).

7. The system of claim 4, wherein said at least one CCFL device (15) further comprises at least one capacitor and one inductor supported by said at least one lighting fixture (20, 118) when the at least one lighting fixture (20, 118) is mounted onto said one of the surfaces, said at least one lighting fixture (20, 118) housing and connecting said at least one CCFL (1), said at least one capacitor, one inductor and said at least one transformer (7) to form a unitary structure.

8. The system of claim 4, wherein said system comprises a plurality of said lighting fixtures and a plurality of said CCFL devices, each comprising at least one CCFL and at least one transformer ; said system further comprising a plurality of said drivers; wherein said substitute controller (19) controls an output from each of said drivers to control substantially simultaneously the intensities of the light emitted by the plurality of CCFL devices.

9. The system of claim 4, said system comprising:
at least one set of at least two (111, 112) said CCFL devices, said at least one set of CCFL devices being supported by said at least one fixture (118);
said driver (104) connected by separate electrical connections (9a) to said at least two CCFL devices (111, 112) of said set for supplying the same or different voltages or currents to said at least two CCFL devices, said at least two CCFL devices of a set comprising CCFLs with phosphors of different color temperatures, to provide adjustable color temperature lighting; and
a housing (30) mechanically connected to and supporting said at least two CCFL devices.

## Patentansprüche

1. Verfahren zum Ändern eines herkömmlichen Beleuchtungssystems zum Beleuchten eines Raumes (100) in einem Gebäude,
wobei der Raum mehrere Flächen (W, C) aufweist und durch diese definiert ist, wobei das herkömmliche Beleuchtungssystem mindestens einen Beleuchtungskörper (20, 118) umfasst, der auf einer (C) der Flächen des Raumes (100) in dem Gebäude angebracht ist,
wobei der mindestens eine Beleuchtungskörper (20, 118) mindestens eine herkömmliche Fassung für ein herkömmliches Leuchtmittel einschließt,
wobei das herkömmliche Beleuchtungssystem weiter elektrische Leitungen (6a, 7a), und einen herkömmlichen Ein/Aus-Lichtschalter oder Beleuchtungsdimmer umfasst, angepasst zum Steuern eines Stroms, mit dem die mindestens eine herkömmliche Fassung über die elektrischen Leitungen (6a, 7a) versorgt wird,
wobei das Verfahren umfasst:
Entfernen des herkömmlichen Ein/Aus-Lichtschalters oder Beleuchtungsdimmers, **gekennzeichnet durch**
Ersetzen des herkömmlichen Ein/Aus-Lichtschalters oder Beleuchtungsdimmers durch ein Ersatzsteuergerät (19), das mindestes einen Treiber (103, 104) einschließt,
wobei das Ersatzsteuergerät (19) in einer Verbindungsdose (16) hinter einer Wand (W) des Raumes (100) angeordnet ist,
wobei das Ersatzsteuergerät (19) Abmessungen aufweist, die in die Verbindungsdose (16) passen,
Verbinden einer CCFL-Vorrichtung (15) elektrisch und mechanisch mit der mindestens einen herkömmlichen Fassung,
wobei die CCFL-Vorrichtung (15) eine CCFL (1), ein Verbindungselement (5), das in die mindestens eine herkömmliche Fassung passt, um die CCFL (1) elektrisch und mechanisch mit der Fassung zu verbinden, und einen Umspanner (7) umfasst, der geeignet ist, einen Wechselstrom mit einer Spannung in dem Bereich von etwa 5 bis 400 Volt und einem Strom bei einer Frequenz in dem Bereich von 1kHz bis 100kHz in einen Ausgabestrom umzuwandeln, der geeignet ist, die CCFL (1) zu betreiben, bewirkend, dass die CCFL (1) Licht abstrahlt,
wobei der mindestens eine Treiber (103, 104) in dem herkömmlichen Beleuchtungssystem beabstanded von der CCFL-Vorrichtung (15) eingebaut ist,
wobei der mindestens eine Treiber (103, 104) geeignet ist einen Eingabestrom von einer Stromquelle in den Wechselstrom umzuwandeln, und
wobei der mindestens eine Treiber (103, 104) mit der Stromquelle verbunden ist, um Eingabestrom von einer Stromquelle in den Wechselstrom umzuwandeln.

2. Verfahren nach Anspruch 1, wobei das Ersatzsteuergerät (19) einen elektrischen Strom in den elektrischen Leitungen (6a, 7a) moduliert, um eingebettete Signale an den mindestens einen Treiber (103, 104) zu übertragen, um eine Ausgabe des mindestens einen Treibers (103, 104) und eine entsprechende Lichtintensität zu steuern, die von der mindestens einen CCFL-Vorrichtung (15) abgestrahlt wird.

3. Verfahren nach Anspruch 1, wobei das Beleuchtungssystem mehrere Beleuchtungskörper umfasst, die auf den Flächen des Raumes angebracht sind, wobei das Verfahren weiter umfasst:
Verbinden einer CCFL-Vorrichtung elektrisch und mechanisch mit der mindestens einen herkömmlichen Fassung jeder der mehreren Beleuchtungskörper,
wobei die CCFL-Vorrichtung eine CCFL, ein Verbindungselement umfasst, das in die mindestens eine herkömmliche Fassung passt, um die CCFL elektrisch und mechanisch mit der Fassung und dem Umspanner (7) zu verbinden.

4. Vorrichtung angepasst zum Ändern eines herkömmlichen Beleuchtungssystems zum Beleuchten eines Raumes (100) in einem Gebäude, wobei der Raum mehrere Flächen (W, C) aufweist und durch diese definiert ist, umfassend:
mindestens eine CCFL-Vorrichtung (15), die mindestens eine CCFL (1), ein Verbindungselement (5), das in die mindestens eine herkömmliche Fassung passt, und mindestens einen Umspanner (7) umfasst, der geeignet ist, einen Wechselstrom mit einer Spannung in dem Bereich von etwa 5 bis 400 Volt bei einer Frequenz in dem Bereich von 1kHz bis 100kHz in einen Ausgabestrom umzuwandeln, der geeignet ist, die mindestens eine CCFL (1) zu betreiben, bewirkend, dass die CCFL (1) Licht abstrahlt,
mindestens einen Beleuchtungskörper (20, 118), wobei der mindestens eine Beleuchtungskörper (20, 118) angepasst ist, die mindestens eine CCFL-Vorrichtung (15) mechanisch zu tragen, falls der Beleuchtungskörper (20, 118) auf einer (C) der Flächen des Raumes (100) angebracht ist, sodass Licht, das von der mindestens einen CCFL-Vorrichtung (15) abgestrahlt wird, den Raum (100) erleuchtet,
einen Treiber (103, 104), der von der mindestens einen CCFL-Vorrichtung (15) beabstanded ist, sodass er im Wesentlichen nicht nachteilig von Wärme beeinflusst wird, die von der mindestens einen CCFL-Vorrichtung (15) erzeugt wird,
wobei der mindestens eine Treiber (103, 104) angepasst ist, um einen Eingabestrom von einer Stromquelle in den Wechselstrom umzuwandeln, und
**gekennzeichnet durch**
ein Ersatzsteuergerät (19), das angepasst ist eine Spannung oder einen Strom zu steuern, mit dem der Treiber (103, 104) versorgt wird, und/oder um den Treiber (103, 104) zu steuern,
wobei das Ersatzsteuergerät (19) den Treiber (103, 104) umfasst,
wobei das Ersatzsteuergerät (19) in einer bestehenden Verbindungsdose (16) hinter einer Wand (W) des Raumes (100) eingebaut ist und einen herkömmlichen Ein/Aus-Lichtschalter oder Beleuchtungsdimmer ersetzt, und
wobei das Ersatzsteuergerät (19) Abmessungen aufweist, die in die Verbindungsdose (16) passen, und wobei der mindestens eine Beleuchtungskörper (20, 118) die mindestens eine herkömmliche Fassung umfasst,
wobei das Verbindungselement (5) angepasst ist, die CCFL (1) elektrisch und mechanisch mit der mindestens einen herkömmlichen Fassung zu verbinden.

5. System nach Anspruch 4, weiter umfassend einen metallischen Leiter (13) mit mindestens einem Verbindungselement, angepasst den Treiber (103, 104) und den mindestens einen Umspanner (7) zu verbinden, um die Wechselspannung von dem Treiber (103, 104) zu dem mindestens einen Umspanner (7) zu leiten, wobei der Leiter (13) zumindest teilweise außerhalb des Raumes (100) und hinter den Flächen (W, C) des Raumes angeordnet ist.

6. System nach Anspruch 4, wobei die herkömmliche Fassung an eine herkömmliche oder eine Heißkathoden-Leuchtstofflampe angepasst ist und das Verbindungselement (5) der CCFL-Vorrichtung (15) gestaltet ist, um elektrisch und mechanisch mit der herkömmlichen Fassung des mindestens einen Beleuchtungskörpers (20, 118) verbunden zu werden.

7. System nach Anspruch 4, wobei die mindestens eine CCFL-Vorrichtung (15) mindestens einen Kondensator und eine Spule, getragen von dem mindestens einen Beleuchtungskörper (20, 118) umfasst,
wobei, falls der mindestens eine Beleuchtungskörper (20, 118) auf einer der Flächen angebracht ist, der mindestens eine Beleuchtungskörper (20, 118), den mindestens einen Kondensator, eine Spule und den mindestens einen Umspanner (7) aufnimmt und diese verbindet, um eine einheitliche Struktur zu bilden.

8. System nach Anspruch 4, wobei das System mehrere der Beleuchtungskörper und mehrere der CCFL-Vorrichtungen umfasst, die jeweils mindestens eine CCFL und mindestens einen Umspanner umfassen,
wobei das System weiter mehrere der Treiber umfasst,
wobei das Ersatzsteuergerät (19) eine Ausgabe von jedem der Treiber steuert, um im Wesentlichen gleichzeitig die Intensitäten des Lichts zu steuern, das von den mehreren CCFL-Vorrichtungen abgestrahlt wird.

9. System nach Anspruch 4, wobei das System umfasst:
mindestens einen Satz von mindestens zwei (111, 112) CCFL-Vorrichtungen, wobei der mindestens eine Satz von CCFL-Vorrichtungen von dem mindestens einen Körper (118) getragen wird,
wobei der Treiber (104) durch getrennte elektrische Verbindungen (9a) mit den mindestens zwei CCFL-Vorrichtungen (111, 112) des Satzes verbunden ist, um die mindestens zwei CCFL-Vorrichtungen mit gleichen oder unterschiedlichen Spannungen oder Strömen zu versorgen, wobei die mindestens zwei CCFL-Vorrichtungen eines Satzes, CCFLs mit Leuchtstoffen unterschiedlichen Farbtemperaturen umfassen, um eine Beleuchtung mit einstellbarer Farbtemperatur bereitzustellen, und
ein Gehäuse (30), das mechanisch mit den mindestens zwei CCFL-Vorrichtungen verbunden ist und diese trägt.

## Revendications

1. Procédé pour modifier un système d'éclairage classique pour éclairer une chambre (100) dans un bâtiment, ladite chambre ayant et étant définie par une pluralité de surfaces (W, C), ledit système d'éclairage classique comportant au moins un appareil d'éclairage (20, 118) monté sur l'une (C) des surfaces de la chambre (100) dans le bâtiment, ledit au moins un appareil d'éclairage (20, 118) comprenant au moins une prise classique pour une lampe classique, ledit système d'éclairage classique comprenant en outre des lignes électriques (6a, 7a) et un interrupteur d'éclairage marche/arrêt classique ou variateur d'éclairage destiné à commander et un courant fourni à l'au moins une prise classique à travers lesdites lignes électriques (6a, 7a), ledit procédé comprenant :
la suppression dudit interrupteur d'éclairage marche/arrêt classique ou variateur d'éclairage,
**caractérisé par**
le remplacement dudit interrupteur d'éclairage marche/arrêt classique ou variateur d'éclairage par un dispositif de commande de remplacement (19) qui comprend au moins un conducteur (103, 104), dans lequel ledit dispositif de commande de substitution (19) est situé dans une boîte de jonction (16) derrière un mur (w) de la chambre (100), ledit dispositif de commande de remplacement (19) ayant des dimensions qui correspondent à l'intérieur de ladite boîte de jonction (16), connectant électriquement et mécaniquement à ladite au moins une prise classique un dispositif CCFL (15), ledit dispositif CCFL (15) comprenant une CCFL (1), un connecteur (5) qui s'ajuste dans ladite au moins une prise classique pour relier électriquement et mécaniquement ladite CCFL (1) à la prise, et un transformateur (7) destiné à convertir un courant alternatif ayant une tension dans une plage d'environ 5 à 400 volts et un courant à une fréquence dans une plage d'environ 1 kHz à 100 kHz à une puissance de sortie adaptée pour faire fonctionner le CCFL (1), afin de faire émettre de la lumière par le dispositif CCFL (1) ;
dans lequel ledit au moins un conducteur (103, 104) est installé dans ledit système d'éclairage classique séparé dudit dispositif CCFL (15), ledit au moins un conducteur (103, 104) étant apte à convertir une puissance d'entrée à partir d'une source d'alimentation en ledit courant alternatif, et ledit au moins un conducteur étant connecté à la source d'alimentation pour convertir une puissance d'entrée à partir d'une source d'alimentation en ledit courant alternatif.

2. Procédé selon la revendication 1, dans lequel ledit dispositif de commande de substitution (19) module l'énergie électrique dans les lignes électriques (6a, 7a) pour transmettre des signaux incorporés audit au moins un conducteur (103, 104) afin de commander une sortie dudit au moins un conducteur (103, 104) et une intensité correspondante de lumière émise par ledit au moins un dispositif CCFL (15).

3. Procédé selon la revendication 1, dans lequel ledit système d'éclairage comprend une pluralité desdits appareils d'éclairage montés sur les surfaces de la chambre, ledit procédé comprenant en outre :
une liaison électrique et mécanique d'un dispositif CCFL à ladite au moins une prise classique de chacune de ladite pluralité d'appareils d'éclairage, ledit dispositif CCFL comprenant un CCFL, un connecteur qui s'adapte dans ladite au moins une prise classique pour relier électriquement et mécaniquement ledit dispositif CCFL à ladite prise, et audit transformateur.

4. Appareil adapté pour modifier un système d'éclairage classique afin d'éclairer une chambre ( 100 ) dans un bâtiment , ladite chambre ayant et étant définie par une pluralité de surfaces (W, C), comprenant :
au moins un dispositif CCFL (15) comprenant au moins une CCFL (1), un connecteur ( 5 ) qui s'adapte dans au moins une prise classique, et au moins un transformateur ( 7 ) adapté pour convertir un courant alternatif ayant une tension dans une plage d'environ 5 à 400 volts à une fréquence dans la plage d'environ 1 kHz à 100 kHz en une puissance de sortie adaptée pour faire fonctionner la au moins une CCFL (1), permettant à la au moins une CCFL (1) d'émettre de la lumière ;
au moins un appareil d'éclairage (20, 118), dans lequel ledit au moins un appareil d'éclairage (20, 118) est adapté pour supporter mécaniquement ledit au moins un dispositif CCFL (15), lorsque ledit appareil d'éclairage (20, 118) est monté sur l'une (C) des surfaces de la chambre (100), de sorte que la lumière émise par ladite au moins une CCFL (1) éclaire ladite chambre (100) ;
un conducteur (108 , 104) séparé dudit au moins un dispositif CCFL (15) de sorte qu'il n'est pratiquement pas affecté négativement par la chaleur générée par le au moins un dispositif CCFL (15), ledit conducteur (103, 104) étant adapté pour convertir une puissance d'entrée provenant d'une source de puissance en ledit en courant alternatif, et
**caractérisé par**
une commande de substitution (19) adaptée pour contrôler une tension ou un courant fourni au conducteur (103, 104) ou pour commander le conducteur (103, 104) ou les deux,
dans lequel ladite commande de substitution (19) comprend ledit conducteur (103, 104) , dans lequel ladite commande de substitution (19) est installée dans une boîte de jonction électrique (16) derrière un mur (W) de la chambre, pour remplacer un interrupteur d'éclairage marche/arrêt classique ou variateur d'éclairage, et dans lequel ladite commande de substitution a des dimensions qui correspondent à l'intérieur de ladite boîte de jonction ( 16 ) et dans lequel ledit au moins un appareil d'éclairage (20, 118) comprend au moins une prise classique, dans lequel ledit connecteur (5) est adapté pour connecter électriquement et mécaniquement ladite CCFL (1) à la prise.

5. Système selon la revendication 4, comprenant en outre un conduit métallique (13) avec au moins un connecteur adapté pour connecter ledit conducteur (103, 104) et ledit au moins un transformateur (7), pour transmettre ledit courant alternatif à partir dudit conducteur (103, 104) audit au moins un transformateur (7), ledit conduit (13) situé au moins partiellement à l'extérieur de ladite chambre (100) et derrière ladite surface (W, C) de la chambre (100).

6. Système selon la revendication 4, dans lequel ladite prise classique est adaptée pour être utilisée avec une lampe à fluorescence classique ou à cathode chaude, et ledit connecteur (5) dudit dispositif CCFL (15) étant formé pour être électriquement et mécaniquement relié à ladite prise classique de l'au moins un appareil d'éclairage (20, 118).

7. Système selon la revendication 4, dans lequel ledit au moins un dispositif CCFL (15) comprend en outre au moins un condensateur et une bobine d'inductance supportés par ledit au moins un appareil d'éclairage (20, 118) lorsque l'au moins un appareil d'éclairage (20, 118) est monté sur les surfaces, ledit au moins un appareil d'éclairage (20, 118) accueillant et connectant ladite au moins une CCFL (1), ledit au moins un condensateur, une bobine d'inductance et ledit au moins un transformateur (7) pour former une structure monobloc.

8. Système selon la revendication 4, dans lequel ledit système comprend une pluralité desdits appareils d'éclairage et une pluralité desdits dispositifs CCFL, comprenant chacun au moins une CCFL et au moins un transformateur, ledit système comprenant en outre une pluralité desdits conducteurs, dans lequel ladite commande de substitution (19) commande une sortie depuis chacun desdits conducteurs pour contrôler sensiblement de manière simultanée les intensités de la lumière émise par la pluralité de dispositifs CCFL.

9. Système selon la revendication 4, ledit système comprenant :
au moins un ensemble d'au moins deux (111, 112) desdits dispositifs CCFL, ledit au moins un ensemble de dispositifs CCFL étant supporté par ledit au moins un dispositif de fixation (118) ;
ledit conducteur (104) relié par des connexions électriques distinctes (9a) aux dits au moins deux dispositifs CCFL (111, 112) dudit ensemble pour fournir la même ou différents tensions ou courants aux dits au moins deux dispositifs CCFL, lesdits au moins deux dispositifs CCFL d'un ensemble comprenant des CCFL à luminophores de différentes températures de couleur, afin de permettre le réglage de l'éclairage de la température de couleur ; et
un boîtier (30) relié mécaniquement aux, et supportant lesdits au moins, deux dispositifs CCFL.
